(19) **Europäisches Patentamt**

**European Patent Office**

**Office européen des brevets**

(11) **EP 1 182 646 A2**

(12) **EUROPÄISCHE PATENTANMELDUNG**

(43) Veröffentlichungstag:
   **27.02.2002   Patentblatt 2002/09**

(51) Int Cl.⁷: **G10L 15/02**

(21) Anmeldenummer: **01000364.8**

(22) Anmeldetag: **13.08.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **16.08.2000   DE 10040063**

(71) Anmelder:
   • **Philips Corporate Intellectual Property GmbH**
     **52064 Aachen (DE)**
     Benannte Vertragsstaaten:
     **DE**
   • **Koninklijke Philips Electronics N.V.**
     **5621 BA Eindhoven (NL)**
     Benannte Vertragsstaaten:
     **FR GB**

(72) Erfinder: **Kienappel, Anne**
   **Philips Corp. Int. Prop. GmbH**
   **52064, Aachen (DE)**

(74) Vertreter: **Volmer, Georg, Dipl.-Ing. et al**
   **Philips Corporate Intellectual Property GmbH,**
   **Habsburgerallee 11**
   **52064 Aachen (DE)**

(54) **Verfahren zur Zuordnung von Phonemen**

(57)   Beschrieben wird ein Verfahren zur Zuordnung von Phonemen ($P_k$) einer Zielsprache zu jeweils einer Ausgangs-Phonemeinheit ($PE_z(P_k)$) eines Sets von Ausgangs-Phonemeinheiten ($PE_1$, $PE_2$,..., $PE_N$), welche jeweils durch Ausgangs-Phonemmodelle beschrieben werden, die unter Verwendung vorhandener Sprachdaten einer Ausgangssprache erzeugt wurden. Hierzu werden in einem ersten Verfahrensschritt mindestens zwei verschiedene sprachdatengetriebene Zuordnungsverfahren (1, 2) zur Zuordnung der Phoneme ($P_k$) der Zielsprache zu jeweils einer Ausgangs-Phonemeinheit ($PE_i(P_k)$, $PE_j(P_k)$) verwendet. Anschließend wird in einem zweiten Schritt ermittelt, ob das jeweilige Phonem ($P_k$) von einer Mehrheit der verschiedenen sprachdatengetriebenen Zuordnungsverfahren übereinstimmend derselben Ausgangs-Phonemeinheit ($PE_i(P_k)$, $PE_j(P_k)$) zugsordnet wurde. Sofern eine mehrheit-lich übereinstimmende Zuordnung durch die verschiedenen sprachdatengetriebenen Zuordnungsverfahren (1, 2) existiert, wird die von der Mehrheit der sprachda-tengetriebenen Zuordnungsverfahren (1, 2) zugeordne-ten Ausgangs-Phonemeinheit ($PE_i(P_k)$, $PE_j(P_k)$) als die dem jeweiligen Phonem ($P_k$) zugeordnete Ausgangs-Phonemeinheit ($PE_z(P_k)$) ausgewählt. Andernfalls wird aus allen Ausgangs-Phonemeinheiten ($PE_i(P_k)$, $PE_j(P_k)$), die von mindestens einem der verschiedenen sprachdatengetriebenen Zuordnungsverfahren (1, 2) dem jeweiligen Phonem ($P_k$) zugeordnet wurden, eine Ausgangs-Phonemeinheit unter Verwendung eines Ähnlichkeitsmaßes gemäß einer symbolphonetischen Beschreibung des zuzuordnenden Phonems ($P_k$) und der Ausgangs-Phonemeinheiten ($PE_i(P_k)$, $PE_j(P_k)$) aus-gewählt.

EP 1 182 646 A2

**Beschreibung**

Die Erfindung betrifft ein Verfahren zur Zuordnung von Phonemen einer Zielsprache zu jeweils einer Ausgangs-Phonemeinheit eines Sets von Ausgangs-Phonemeinheiten, welche jeweils durch Ausgangs-Phonemmodelle beschrieben werden, die unter Verwendung vorhandener Sprachdaten einer Ausgangssprache erzeugt wurden. Darüber hinaus betrifft die Erfindung ein Verfahren zur Erzeugung von Phonemmodellen für Phoneme einer Zielsprache, ein Set von linguistischen Modellen zur Verwendung in automatischen Spracherkennungssystemen sowie ein Spracherkennungssystem, enthaltend ein entsprechendes Set von akustischen Modellen.

Spracherkennungssysteme arbeiten in der Regel in der Weise, dass zunächst das Sprachsignal in einer Merkmalsanalyseeinheit spektral oder zeitlich analysiert wird. In dieser Merkmalsanalyseeinheit werden die Sprachsignale üblicherweise in Abschnitte, sogenannte "Fenster" (Frames), aufgeteilt. Diese Fenster werden dann für die weitere Analyse in geeigneter Form codiert und digitalisiert. Ein beobachtetes Signal kann dabei durch mehrere verschiedene Parameter, bzw. in einem mehrdimensionalen Parameterraum durch einen sogenannten "Beobachtungsvektor", beschrieben werden. Die eigentliche Spracherkennung, d. h. die Erkennung des Bedeutungsinhalts des Sprachsignals, erfolgt dann dadurch, dass die durch die Beobachtungsvektoren beschriebenen Abschnitte des Sprachsignals, bzw. eine ganze Sequenz von Beobachtungsvektoren, mit Modellen von verschiedenen, sinnvoll möglichen Sequenzen von Beobachtungen verglichen wird und somit ein Modell herausgesucht wird, welches am besten zu dem aufgetretenen Beobachtungsvektor, bzw. der Sequenz passt. Das Spracherkennungssystem muss hierzu eine Art Bibliothek von den verschiedensten möglichen Signalfolgen aufweisen, aus denen das Spracherkennungssystem dann die jeweils passende Signalfolge auswählen kann. Das heißt, das Spracherkennungssystem verfügt über ein Set von akustischen Modellen, die im Prinzip sinnvollerweise bei einem Sprachsignal vorkommen könnten. Hierbei kann es sich beispielsweise um ein Set von Phonemen oder phonemartigen Einheiten, von Diphonen oder Triphonen, bei denen jeweils das Modell des Phonems vom vorhergehenden und/oder nachfolgenden Phonem innerhalb eines Kontexts abhängt, aber auch von ganzen Worten handeln. Es kann sich auch um ein gemischtes Set der verschiedenen akustischen Einheiten handeln.

Weiterhin werden ein Aussprachelexikon für die jeweilige Sprache sowie, um die Erkennungsleistung zu verbessern, ggf. verschiedene Wortlexika, stochastische Sprachmodelle und Grammatik-Vorgaben der jeweiligen Sprache benötigt, welche bei der Auswahl der in Frage kommenden Sequenz von aufeinanderfolgenden Modellen bestimmte, sinnvolle Beschränkungen vorgeben. Derartige Beschränkungen verbessern zum einen die Qualität der Erkennung, zum anderen sorgen sie auch für eine erhebliche Beschleunigung, da durch diese Beschränkungen nur bestimmte Kombinationen von Beobachtungsfolgen in Frage kommen.

Eine Methode, akustische Einheiten, d. h. bestimmte Folgen von Beobachtungsvektoren zu beschreiben, ist die Verwendung sogenannter "Hidden-Markow-Modelle" (HM-Modelle). Es handelt sich hierbei um stochastische Signalmodelle, bei denen davon ausgegangen wird, dass einer Signalfolge eine sogenannte "Markow-Kette" von verschiedenen Zuständen zugrunde liegt, wobei zwischen den einzelnen Zuständen bestimmte Übergangswahrscheinlichkeiten bestehen. Die jeweiligen Zustände selbst sind dabei nicht erkennbar ("Hidden") und das Auftreten der tatsächlichen Beobachtungen in den einzelnen Zuständen wird durch eine Wahrscheinlichkeitsfunktion in Abhängigkeit vom jeweiligen Zustand beschrieben. Ein Modell für eine bekimmte Sequenz von Beobachtungen kann daher in diesem Konzept im wesentlichen durch die Folge der verschiedenen durchlaufenden Zustände, durch die Dauer des Aufenthalts in den jeweiligen Zuständen, die Übergangswahrscheinlichkeit zwischen den Zuständen sowie die Wahrscheinlichkeit des Auftretens der unterschiedlichen Beobachtungen in den jeweiligen Zuständen beschrieben werden. Ein Modell für ein bestimmtes Phonem wird dabei so erzeugt, dass zunächst geeignete Anfangsparameter für ein Modell verwendet werden und dann in einem sogenannten "Training" dieses Modell durch Veränderung der Parameter so an das zu modellierende Phonem der jeweiligen Sprache angepasst wird, dass ein optimales Modell gefunden ist. Für dieses Training d h. die Anpassung der Modelle an die tatsächlichen Phoneme einer Sprache, werden ausreichend viele und qualitativ gute Sprachdaten der jeweiligen Sprache benötigt. Die Details über die verschiedenen HM-Modelle sowie die einzelnen anzupassenden genauen Parameter spielen für die vorliegende Erfindung keine wesentliche Rolle und werden daher nicht näher beschrieben.

Wenn ein Spracherkennungssystem auf der Basis von Phonemmodellen (beispielsweise den genannten Hidden-Markow-Phonemmodellen) für eine neue Zielsprache trainiert wird, für die leider nur wenig original Sprachmaterial zur Verfügung steht, kann Sprachmaterial anderer Sprachen zur Unterstützung des Trainings benutzt werden. So können beispielsweise zunächst HM-Modelle in einer anderen, von der Zielsprache verschiedenen Ausgangssprache trainiert werden, und diese Modelle werden dann auf die neue Sprache als Ausgangsmodelle transferiert und mit den vorhandenen Sprachdaten der Zielsprache an die Zielsprache endgültig adaptiert. Es hat sich inzwischen herausgestellt, dass dabei zunächst eine Trainierung von Modellen für multilinguale Phonemeinheiten, welche auf mehreren Ausgangssprachen basieren, und eine Anpassung dieser multilingualen Phonemeinheiten an die Zielsprache, bessere Erfolge liefert, als die Verwendung von nur monolingualen Modellen einer Ausgangssprache (T. Schultz und A Waibel in "Language Independent and Language Adaptive Large Vocabulary Speech Recognition", Proc. ICSLP, pp.

1819-1822, Sidney, Australien 1998).

Für den Transfer wird eine Phonemzuordnung der Phoneme der neuen Zielsprache zu den Phonemeinheiten der Ausgangssprache bzw. zu den multilingualen Phonemeinheiten benötigt, die der akustischen Ähnlichkeit der respektiven Phoneme bzw. Phonemeinheiten Rechnung trägt. Das Problem der Zuordnung der Phoneme der Zielsprache zu den Ausgangs-Phonemmodellen ist dabei eng mit dem Problem der Definition der Ausgangs-Phonemeinheiten selbst verknüpft, denn nicht nur die Zuordnung zur Zielsprache, sondern auch die Definition der Ausgangs-Phonemeinheiten selbst basiert auf akustischer Ähnlichkeit.

Zur Bewertung der akustischer Ähnlichkeit von Phonemen verschiedener Sprachen kann grundsätzlich phonetisches Hintergrundwissen verwendet werden. Daher ist im Prinzip eine Zuordnung der Phoneme der Zielsprache zu den Ausgangs-Phonemeinheiten auf Basis dieses Hintergrundwissens möglich. Hierzu ist eine Phonetik-Expertise in den beteiligten Sprachen nötig Derartige Expertisen sind jedoch relativ aufwendig. Mangels ausreichender Expertisen wird folglich häufig auf internationale phonetische Lautschriften, beispielsweise IPA oder SAMPA, zur Zuordnung der Phoneme der Zielsprache zu den Ausgangs-Phonemeinheiten zurückgegriffen. Diese Art der Zuordnung ist dann eindeutig, wenn die Ausgangs-Phonemeinheiten selber eindeutig einem internationalen Lautschriftsymbol zuzuordnen sind. Für die genannten multilingualen Phonemeinheiten ist dies jedoch nur gegeben, wenn die Phonemeinheiten der Ausgangssprachen selber auf einer Lautschrift basieren. Um ein einfaches zuverlässiges Zuordnungsverfahren zur Zielsprache zu erhalten, könnten daher die Ausgangs-Phonemeinheiten unter Verwendung von Phonemsymbolen einer internationalen Lautschrift definiert werden. Diese Phonemeinheiten sind jedoch schlechter für ein Spracherkennungssystem geeignet, als Phonemeinheiten, welche mittels statistischer Modelle auf vorhandenen realen Sprachdaten erzeugt wurden.

Gerade aber für solche multilingualen Ausgangs-Phonemeinheiten, welche auf Basis der Sprachdaten der Ausgangssprachen erzeugt wurden, ist wiederum die Zuordnung mit Hilfe einer Lautschrift nicht unbedingt eindeutig. Eine klare phonologische Identität solcher Einheiten ist nicht garantiert. Darum ist eine wissensbasierte Zuordnung von Hand auch für einen Phonetik-Experten äußerst schwierig

Im Prinzip besteht die Möglichkeit, die Zuordnung der Phoneme der Zielsprache zu den Ausgangs-Phonemmodellen ebenfalls auf Basis von Sprachdaten und deren statistischer Modelle automatisch durchzuführen. Die Qualität von derartigen sprachdatengetriebenen Zuordnungsverfahren hängt jedoch kritisch davon ab, dass genügend Sprachdaten in der Sprache vorliegen, deren Phoneme den Modellen zugeordnet werden sollen. Dies ist aber gerade für die Zielsprache nicht unbedingt gegeben. Es existiert daher leider kein einfaches zuverlässiges Zuordnungsverfahren für derartige mittels einer sprachdatengetriebene Definition erzeugten Phonemeinheiten zur Zielsprache.

Es ist Aufgabe der vorliegenden Erfindung eine Alternative zum bekannten Stand der Technik zu schaffen, mit der eine einfache und zuverlässige Zuordnung von Phonemen einer Zielsprache zu beliebigen Ausgangs-Phonemeinheiten, insbesondere auch zu mittels einer sprachdatengetriebenen Definition erzeugten, multilingualen Phonemeinheiten, erlaubt. Diese Aufgabe wird durch ein Verfahren gemäß Patentanspruch 1 gelöst.

Für das erfindungsgemäße Verfahren werden dabei mindestens zwei, wenn möglich sogar noch mehrere verschiedene sprachdatengetriebene Zuordnungsverfahren benötigt. Es sollte sich hierbei um komplementäre sprachdatengetriebene Zuordnungsverfahren handeln, die jeweils auf völlig unterschiedliche Weise arbeiten.

Mit diesen verschiedenen sprachdatengetriebenen Zuordnungsverfahren wird dann für jedes Phonem der Zielsprache so verfahren, dass das Phonem jeweils einer Ausgangs-Phonemeinheit zugeordnet wird. Nach diesem Schritt steht also aus jedem sprachdatengetriebenen Verfahren jeweils eine Ausgangs-Phonemeinheit zur Verfügung, die dem jeweiligen Phonem zugeordnet wurde. Diese Ausgangs-Phonemeinheiten werden verglichen, um festzustellen, ob jeweils dieselben Ausgangs-Phonemeinheiten dem Phonem zugeordnet wurden. Wenn die Mehrheit der sprachdatengetriebenen Zuordnungsverfahren ein übereinstimmen des Ergebnis liefert, so wird diese Zuordnung ausgewählt, d. h. es wird genau die Ausgangs-Phonemeinheit dem Phonem zugeordnet, die am häufigsten von den automatischen sprachdatengetriebenen Verfahren ausgewählt wurde. Wenn es keine Mehrheit der verschiedenen Verfahren gibt, die übereinstimmende Ergebnisse liefern, beispielsweise wenn bei der Verwendung von zwei verschiedenen sprachdatengetriebenen Zuordnungsverfahren diese beiden Zuordnungsverfahren den Phonemen jeweils unterschiedliche Ausangs-Phonemeinheiten zugeordnet haben, so wird unter den verschiedenen Zuordnungen genau die Ausgangs-Phonemeinheit ausgewählt, welche ein bestimmtes Ähnlichkeitsmaß gemäß einer symbolphonetischen Beschreibung des zuzuordnenden Phonems und der jeweiligen Ausgangs-Phonemeinheiten am besten erfüllt.

Der Vorteil des erfindungsgemäßen Verfahrens ist dabei, dass es eine optimale Ausnutzung von Sprachdaten-Material erlaubt, wenn es vorhanden ist (also insbesondere auf Seiten der Ausgangssprachen bei der Definition der Ausgangs-Phonemeinheiten), und nur dann auf phonetisches bzw. linguistisches Hintergrundwissen zurückgreift, wenn das Datenmaterial unzureichend ist, um eine Zuordnung mit hinreichender Konfidenz zu bestimmen. Das Konfidenzmaß ist hierbei die Übereinstimmung der Ergebnisse der verschiedenen sprachdatengetriebenen Zuordnungsverfahren. Auf diese Weise können auch die Vorteile datengetriebener Definitionsverfahren für multilinguale Phonemeinheiten im Transfer zu neuen Sprachen ausgenutzt werden. Die Anwendung des erfindungsgemäße Verfahren ist jedoch nicht auf HM-Modelle oder auf multilinguale Ausgangs-Phonemeinheiten beschränkt, sondern kann auch bei anderen Modellen und natürlich auch zur Zuordnung von monolingualen Phonemen bzw. Phonemeinheiten nützlich sein. Im folgenden wird aber beispielhaft von einer Verwendung für ein Set von multilingualen Phonemeinheiten ausgegangen, die jeweils durch HM-Modelle beschrieben werden.

Die wissensbasierte (d. h. auf phonetischem Hintergrundwissen basierende) Zuordnung im Falle unzureichender Konfidenz ist besonders einfach, da nur aus einer sehr begrenzten Anzahl von möglichen Lösungen, die durch die sprachdatengetriebenen Verfahren bereits vorgegeben sind, gewählt werden muss. Hierbei bietet es sich an, dass das Ähnlichkeitsmaß gemäß der symbolphonetischen Beschreibungen Informationen über die Zuordnung des jeweiligen Phonems und die Zuordnung der jeweiligen Ausgangs-Phonemeinheiten zu Phonemsymbolen und/oder Phonemklassen einer vorgegebenen, vorzugsweise internationalen, Lautschrift, wie SAMPA oder IPA, umfasst. Hierzu wird lediglich eine Lautschrift-Repräsentation der Phoneme der beteiligten Sprachen sowie eine Zuordnung der Lautschriftsymbole zu phonetischen Klassen gebraucht. Die Auswahl der "richtigen" Zuordnung unter den bereits durch die sprachdatengetriebenen Zuordnungsverfahren ausgewählten Ausgangs-Phonemeinheiten aufgrund der reinen Phonemsymbol-Übereinstimmung und Phonemklassen-Übereinstimmung zu dem zuzuordnenden Phonem der Zielsprache basiert auf einem sehr einfachen Kriterium und benötigt kein linguistisches Expertenwissen. Es kann daher problemlos mittels geeigneter Software auf einem beliebigen Rechner realisiert werden, sodass das gesamte erfindungsgemäße Zuordnungsverfahren vorteilhafterweise vollautomatisch durchgeführt werden kann.

Für die sprachdatengetriebenen Zuordnungsverfahren gibt es verschiedene Möglichkeiten:

Bei einem ersten sprachdatengetriebenen Zuordnungsverfahren werden zunächst unter Verwendung der Sprachdaten Phonemmodelle für die einzelnen Phoneme der Zielsprache erzeugt, d. h., es werden Modelle auf der Zielsprache unter Verwendung des zur Verfügung stehenden Sprachmaterials der Zielsprache trainiert. Anschließend wird für die erzeugten Modelle jeweils ein Differenzmaß zu den verschiedenen Ausgangs-Phonemmodellen der entsprechenden Ausgangs-Phonemeinheiten der Ausgangssprachen ermittelt. Bei diesem Differenzmaß kann es sich beispielsweise um eine geometrische Distanz innerhalb des mehrdimensionalen Parameterraums der anfangs erwähnten Beobachtungsvektoren handeln. Dem Phonem wird dann jeweils genau die Ausgangs-Phonemeinheit zugeordnet, welche das kleinste Differenzmaß aufweist, das heißt, es wird die nächstliegende Ausgangs-Phonemeinheit genommen.

Bei einem anderen sprachdatengetriebenen Zuordnungsverfahren wird zunächst das zur Verfügung stehende Sprachdaten-Material der Zielsprache, in einer sogenannten Phonem-Start- und -Endsegmentierung zerlegt. Dabei werden unter Zuhilfenahme von Phonemmodellen einer definierten Lautschrift, beispielsweise SAMPA oder IPA, die Sprachdaten in einzelne Phoneme segmentiert. Diese Phoneme der Zielsprache werden dann in eine Spracherkennung eingegeben, welche auf Basis des Sets der zuzuordnenden Ausgangs-Phonemeinheiten arbeitet bzw. auf deren Ausgangs-Phonemmodellen basiert. Es werden in der Spracherkennung auf übliche Weise Erkennungswerte für die Ausgangs-Phonemmodelle ermittelt, das heißt, es wird festgestellt, mit welcher Wahrscheinlichkeit ein bestimmtes Phonem als bestimmte Ausgangs-Phonemeinheit erkannt wird. Jedem Phonem wird dann die Ausgangs-Phonemeinheit zugeordnet, für deren Ausgangs-Phonemmodell am häufigsten die besten Erkennungswerte ermittelt werden. Mit anderen Worten: Es wird einem Phonem der Zielsprache genau die Ausgangs-Phonemeinheit zugeordnet, die das Spracherkennungssystem am häufigsten bei der Analyse des entsprechenden Zielsprachen-Phonems erkannt hat.

Das erfindungsgemäße Verfahren erlaubt eine relativ schnelle und gute Erzeugung von Phonemmodellen für Phoneme einer Zielsprache zur Verwendung in automatischen Spracherkennungssystemen, indem nach dem genannten Verfahren den Phonemen der Zielsprache die Ausgangs-Phonemeinheiten zugeordnet werden, und dann die Phoneme jeweils durch die zugehörigen Ausgangs-Phonemmodelle beschrieben werden, die unter Verwendung von umfangreichem vorhandenen Sprachdaten-Material von verschiedenen Ausgangssprachen erzeugt wurden. Für jedes Zielsprachen-Phonem wird dabei das Ausgangs-Phonemmodell als "Start-Modell" verwendet, welches unter Verwendung des Sprachdaten-Materials schließlich der Zielsprache angepasst wird. Das erfindungsgemäße Zuordnungsverfahren wird dabei also als Unterverfahren innerhalb des Verfahrens zur Erzeugung von Phonemmodellen der Zielsprache verwendet.

Das gesamte Verfahren zur Erzeugung der Phonemmodelle einschließlich des erfindungsgemäßen Zuordnungsverfahrens ist vorteilhafterweise durch geeignete Software auf entsprechend ausgestatteten Rechnern realisierbar. Teilweise kann es aber auch vorteilhaft sein, wenn bestimmte Teilroutinen des Verfahrens, wie beispielsweise die Umwandlung der Sprachsignale in Beobachtungsvektoren, in Form von Hardware realisiert werden, um höhere Prozessgeschwindigkeiten zu erreichen.

Die so erzeugten Phonemmodelle können in einem Set von akustischen Modellen eingesetzt werden, welches beispielsweise gemeinsam mit einem Aussprache-Lexikon der jeweiligen Zielsprache zur Verwendung in automatischen Spacherkennungssystemen zur Verfügung steht. Bei dem Set von akustischen Modellen kann es sich um ein Set von kontextunabhängigen Phonemmodellen handeln. Selbstverständlich kann es sich aber auch um Diphon-, Triphon- oder Wortmodelle handeln, die aus den Phonemmodellen zusammengesetzt sind. Es ist klar, dass derartige aus mehreren Phonen zusammengesetzte akustische Modelle in der Regel sprachabhängig sind.

Die Erfindung wird im Folgenden unter Hinweis auf die Figuren anhand eines Ausführungsbeispiels näher erläutert. Die nachfolgend dargestellten Merkmale und die bereits oben beschriebenen Merkmale können nicht nur in den genannten Kombinationen, sondern auch einzeln oder in anderen Kombinationen erfindungswesentlich sein. Es stellen dar:

Figur 1     einen schematischen Ablauf des erfindungsgemäßen Zuordnungsverfahren;

Figur 2     eine Tabelle eines aus den Ausgangssprachen Französisch, Deutsch, Italienisch, Portugiesisch und Spanisch gebildeten Sets von 94 multilingualen Ausgangs-Phonemeinheiten.

Für ein erstes Ausführungsbeispiel wurden zunächst aus fünf verschiedenen Ausgangssprachen - Französisch, Deutsch, Italienisch, Portugiesisch und Spanisch - ein Set von N multilingualen Phonemeinheiten gebildet. Um aus den insgesamt 182 einzelnen sprachabhängigen Phonemen der Ausgangssprachen diese Phonemeinheiten zu bilden, wurden jeweils akustisch ähnliche Phoneme zusammengefasst und für diese sprachabhängigen Phoneme auf Basis des Sprachmaterials der Ausgangssprachen ein gemeinsames Modell, ein multilinguales HM-Modell, trainiert.

Um festzulegen, welche Phoneme der Ausgangssprachen jeweils einander so ähnlich sind, dass sie sinnvollerweise eine gemeinsame multilinguale Phonemeinheit bilden, wurde ein sprachdatengetriebenes Verfahren verwendet.

Dabei wurde zunächst ein Abstandsmaß $D$ zwischen den einzelnen sprachabhängigen Phonemen ermittelt. Hierzu wurden für die 182 Phoneme der Ausgangssprachen jeweils kontextunabhängige HM-Modelle mit $N_S$-Zuständen pro Phonem gebildet. Jeder Zustand eines Phonems wird dabei durch eine Mischung von n Laplace-Wahrscheinlichkeitsdichten beschrieben. Jede Dichte $j$ hat hierbei das Mischungsgewicht $w_j$ und wird repräsentiert durch den Mittelwert der $N_F$-Komponente und die Standabweichungsvektoren $\vec{m}_j$ und $\vec{s}_j$. Das Abstandsmaß ist dabei definiert als

$$D(P_1,P_2) = d(P_1,P_2)/2 + d(P_2,P_1)/2$$

wobei

$$d(P_1, P_2) = \sum_{l=1}^{N_s} \sum_{i=1}^{n_{1,l}} w_i^{(1,l)} \min_{0 < j < n_{2,l}} \sum_{k=1}^{N_F} \frac{\left| m_{i,k}^{(1,l)} - m_{j,k}^{(2,l)} \right|}{s_{i,k}^{(2,l)}}$$

ist. Diese Definition kann als geometrische Distanz verstanden werden.

Die 182 Phoneme der Ausgangssprachen wurden dann mit Hilfe des so definierten Anstandsmaßes derartig gruppiert, dass die mittlere Distanz zwischen den Phonemen desselben multilingualen Phonems möglichst minimal ist.

Die Zuordnung erfolgte automatisch mit einem sogenannten "Bottom-Up-Clustering"-Algorithmus. Dabei werden nach und nach die einzelnen Phoneme zu "Clustem" zusammengesetzt, indem bis zu einem bestimmten Abbruchkriterium immer ein einzelnes Phonem dem "nächstliegenden" Cluster hinzugefügt wird Unter nächstliegendem Cluster ist hierbei der Cluster zu verstehen, für den die oben definierte mittlere Distanz minimal ist, nachdem das einzelne Phonem hinzugefügt wird Auf gleiche Weise können selbstverständlich auch zwei Cluster, welche bereits aus mehreren Phonemen bestehen, zusammengefügt werden.

Durch die Wahl des oben definierten Distanzmaßes ist sichergestellt, dass die in dem Verfahren erzeugten multilingualen Phonemeinheiten unterschiedliche Klassen von ähnlichen Klängen beschreiben, da die Distanz zwischen den Modellen von der klanglichen Ähnlichkeit der Modelle abhängt.

Als weiteres Kriterium wurde vorgegeben, dass niemals zwei Phoneme derselben Sprache in derselben multilingualen Phonemeinheit vertreten sind. Das heißt, bevor ein Phonem einer bestimmten Ausgangssprache einem bestimmten Cluster als nächstliegenden Cluster zugeordnet wurde, wurde zunächst überprüft, ob dieser Cluster bereits ein Phonem der jeweiligen Sprache enthält. Wenn dies der Fall ist, wurde in einem nächsten Schritt überprüft, ob ein Austausch der beiden Phoneme der entsprechenden Sprache zu einer geringeren mittleren Distanz innerhalb der Cluster führen würde. Nur dann wurde ein Austausch durchgeführt, anderenfalls wurde der Cluster unverändert belassen. Eine entsprechende Prüfung wurde durchgeführt, bevor zwei Cluster miteinander verschmolzen wurden. Durch diese zusätzliche einschränkende Bedingung ist sichergestellt, dass die multilingualen Phonemeinheiten - wie ja auch die Phoneme der einzelnen Sprachen - definitionsgemäß dazu dienen können, um zwei Worte einer Sprache voneinander zu unterscheiden.

Des weiteren wurde ein Abbruchkriterium für das Cluster-Verfahren so gewählt, dass keinerlei Klänge von weit entfernten phonetischen Klassen im selben Cluster vertreten sind.

Im Cluster-Verfahren wurde so ein Set von N verschiedenen multilingualen Phonemeinheiten erzeugt, wobei N zwischen 182 (der Anzahl der einzelnen sprachabhängigen Phoneme) und 50 ( der maximalen Anzahl der Phoneme in einer der Ausgangssprachen) liegen kann. Im vorliegenden Ausführungsbeispiel wurden N = 94 Phonemeinheiten erzeugt und dann das Cluster-Verfahren abgebrochen.

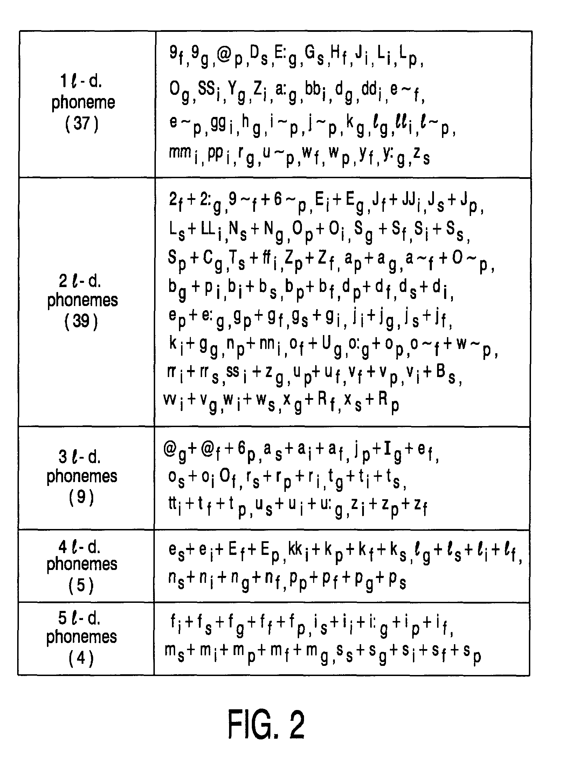

Figur 2 zeigt eine Tabelle dieses Sets von insgesamt 94 multilingualen Ausgangs-Phonemeinheiten. In der linken Spalte dieser Tabelle ist jeweils die Anzahl der Phonemeinheiten aufgezeigt, die aus einer bestimmten Anzahl von einzelnen Phonemen der Ausgangssprachen kombiniert sind. In der rechten Spalte sind jeweils die einzelnen Phoneme bzw. (durch ein "+" untereinander verbunden) die Gruppen von Ausgangs-Phonemen, welche jeweils eine Phonemeinheit bilden, aufgeführt. Die einzelnen sprachabhängigen Phoneme sind hierbei in der internationalen Lautschrift SAMPA dargestellt, wobei der Index die jeweilige Sprache angibt (f = französisch, g = deutsch, i = italienisch, p = portugiesisch, s = spanisch). Beispielsweise sind - wie aus der untersten Zeile in der rechten Spalte der Tabelle in Figur 2 zu ersehen ist - die Phoneme f, m und s in sämtlichen 5 Ausgangssprachen akustisch untereinander so ähnlich, dass sie eine gemeinsame multilinguale Phonemeinheit bilden Insgesamt besteht das Set aus 37 Phonemeinheiten, welche jeweils aus nur einem sprachabhängigen Phonem definiert werden, aus 39 Phonemeinheiten, welche jeweils aus 2 einzelnen sprachabhängigen Phonemen definiert werden, aus 9 Phonemeinheiten, welche aus 3 einzelnen sprachabhängigen Phonemen definiert werden, aus 5 Phonemeinheiten, welche jeweils aus 4 sprachabhängigen Phonemen definiert werden, und aus nur 4 Phonemeinheiten, welche aus 5 sprachabhängigen Phonemen definiert werden. Die maximale Anzahl der einzelnen Phoneme innerhalb einer multilingualen Phonemeinheit ist aufgrund der oben erwähnten Bedingung dass niemals zwei Phoneme derselben Sprache in derselben Phonemeinheit vertreten sein dürfen, durch die Anzahl der beteiligten Sprachen - hier fünf Sprachen - vorgegeben.

Für den Sprachtransfer dieser multilingualen Phonemeinheiten wird dann das erfindungsgemäße Verfahren eingesetzt, mit dem die Phoneme der Zielsprachen, in dem vorliegenden Ausführungsbeispiel Englisch und Dänisch, den multilingualen Phonemeinheiten des in Figur 2 dargestellten Sets zugeordnet werden.

Das erfindungsgemäße Verfahren ist von dem jeweiligen konkreten Set von Ausgangs-Phonemeinheiten unabhängig. Es wird an dieser Stelle ausdrücklich darauf hingewiesen, dass die Gruppierung der einzelnen Phoneme zur Bildung der multilingualen Phoneme auch mit einem anderen geeigneten Verfahren durchgeführt werden kann. Insbesondere kann auch ein anderes geeignetes Abstandsmaß bzw. Ähnlichkeitsmaß zwischen den einzelnen sprachabhängigen Phonemen verwendet werden.

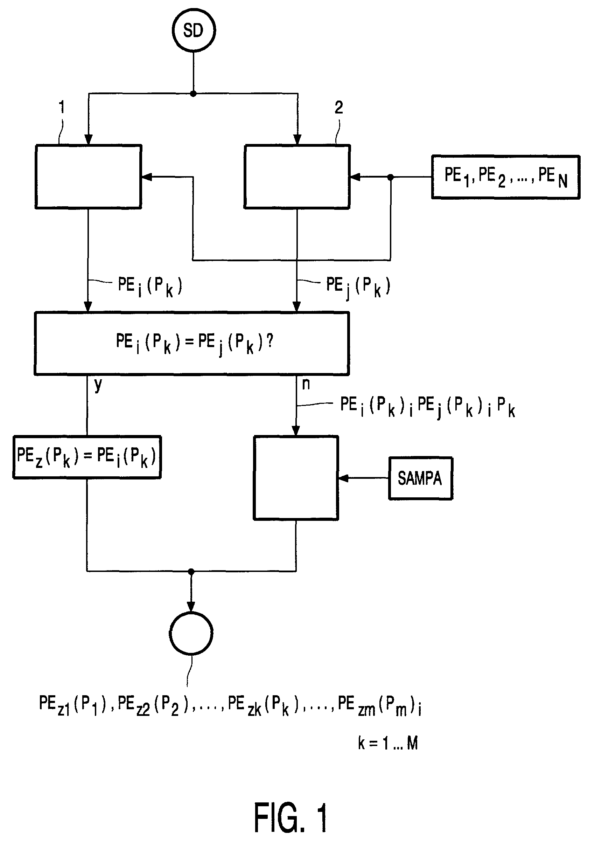

Das erfindungsgemäße Verfahren ist schematisch im grehen Überblick in Figur 1 dargestellt. Im dargestellten Ausführungsbeispiel stehen genau zwei verschiedene sprachdatengetriebene Zuordnungsverfahren zur Verfügung, die in der Figur 1 als Verfahrensblöcke 1, 2 dargestellt sind.

Im ersten der beiden sprachdatengetriebenen Zuordnungsverfahren 1 werden unter Verwendung der Sprachdaten SD der Zielsprache jeweils zunächst HM-Modelle für die Phoneme $P_k$ der Zielsprache erzeugt (Im folgenden wird dabei davon ausgegangen, dass die Zielsprache M unterschiedliche Phoneme $P_1$ bis $P_M$ aufweist). Hierbei handelt es sich selbstverständlich um Modelle, die aufgrund des geringen Sprachdaten-Materials der Zielsprache noch relativ schlecht sind. Für diese Modelle der Zielsprache wird dann jeweils nach den oben beschriebenen Formeln ein Abstand D zu den HM-Ausgangs-Phonemmodellen aller Ausgangs-Phonemeinheiten ($PE_1$, $PE_2$, ..., $PE_N$) berechnet. Jedes Phonem der Zielsprache $P_k$ wird dann der Phonemeinheit $PE_i$ ($P_k$) zugeordnet, deren Ausgangs-Phonemmodell den geringsten Abstand zum Phonemmodell des Phonems $P_k$ der Zielsprache hat.

Im zweiten der beiden Verfahren werden die ankommenden Sprachdaten SD zunächst in einzelne Phoneme segmentiert. Diese sogenannte "Phonem-Start- und -Endsegmentierung" erfolgt mit Hilfe eines Sets von Modellen für multilinguale Phoneme die gemäß der internationalen Lautschrift SAMPA definiert wurden. Die so erhaltenen segmentierten Sprachdaten der Zielsprache durchlaufen dann ein Spracherkennungssystem, welches auf Basis des Satzes der zuzuordnenden Phonemeinheiten $PE_1$, ..., $PE_N$ arbeitet. Den einzelnen durch die Segmentierung entstandenen Phonemen $P_k$ der Zielsprache werden dann genau die Phonemeinheiten $PE_j$ ($P_k$) zugeordnet, die von der Spracherkennung am häufigsten als das Phonem $P_k$ erkannt werden.

In beiden Verfahren gehen also die gleichen Sprachdaten SD und das gleiche Set von Phonemeinheiten $PE_1$, ..., $PE_N$ ein.

Nach Durchführung dieser beiden sprachdatengetriebenen Zuordnungsverfahren 1,2 stehen dann für jedes Phonem $P_k$ genau zwei zugeordnete Phonemeinheiten $P_i$ ($P_k$) und $PE_j$ ($P_k$) zur Auswahl. Die beiden sprachdatengetriebenen Zuordnungsverfahren 1,2 können im übrigen sowohl zeitlich parallel als auch nacheinander durchgeführt werden.

In einem darauffolgenden Schritt 3 werden dann für jedes Phonem $P_k$ der Zielsprache die von den beiden Zuordnungsverfahren 1, 2 zugeordneten Phonemeinheiten $PE_i$ ($P_k$), $PE_j$ ($P_k$) verglichen. Sind die beiden zugeordneten Phonemeinheiten für das jeweilige Phonem $P_k$ identisch, so wird einfach als letztendlich zugeordnete Phonemeinheit $PE_z$ ($P_k$) diese gemeinsame Zuordnung angenommen. Anderenfalls findet in einem nachfolgenden Schritt 4 eine Auswahl unter diesen von den sprachdatengetriebenen automatischen Zuordnungsverfahren gefundenen Phonemeinheiten $PE_i$ ($P_k$), $PE_j$ ($P_k$) statt.

Diese Auswahl in Schritt 4 erfolgt auf der Basis von phonetischem Hintergrundwissen, wobei ein relativ simples, auf einfache Weise automatisch durchzuführendes Kriterium verwendet wird. Im einzelnen wird die Auswahl einfach so getroffen, dass genau die Phonemeinheit ausgewählt wird, deren Phonemsymbol bzw. deren Phonemklasse innerhalb der internationalen Lautschrift SAMPA mit dem Symbol bzw. der Klasse des Zielsprachen-Phonems übereinstimmt. Hierzu müssen zunächst die Phonemeinheiten den SAMPA-Symbolen zugeordnet werden. Dies geschieht unter Rückgriff auf die Symbole der ursprünglichen, sprachabhängigen Phoneme, aus denen sich die jeweilige Phonemeinheit zusammensetzt. Außerdem müssen selbstverständlich auch die Phoneme der Zielsprachen den internationalen SAMPA-Symbolen zugeordnet werden. Dies kann jedoch auf relativ einfache Weise geschehen, in dem alle Phoneme genau den Symbolen zugeordnet werden, die dieses Phonem symbolisieren oder die sich lediglich durch einen Längenzusatz:" unterscheiden. Lediglich einzelne Einheiten der Zielsprache, für die es keine Übereinstimmung mit den Symbolen des SAMPA-Alphabets gibt, müssen entsprechend klanglich ähnlichen Symbolen zugeordnet werden. Dies kann von Hand oder auch automatisch geschehen.

Als Ausgangsdaten erhält man dann aus dem erfindungsgemäßen Zuordnungsverfahren eine Folge von Zuordnungen $PE_{Z1}$ ($P_1$), $PE_{Z2}$ ($P_2$), ..., $PE_{ZM}$ ($P_M$) von Phonemeinheiten zu den M möglichen Phonemen der Zielsprache, wobei Z1, Z2, ..., ZM = 1 bis N sein kann. Hierbei kann jede multilinguale Ausgangs-Phonemeinheit im Prinzip mehreren Phonemen der Zielsprache zugeordnet sein.

Um zur Erzeugung des Sets von M Modellen für die Zielsprachen-Phoneme für jedes der Zielsprachen-Phoneme ein eigenes separates Startmodell zu erhalten, werden in Fällen, in denen eine multilinguale Phonemeinheit mehreren ($X$ > 1) Zielsprachen-Phonemeinheiten zugeordnet ist, das Ausgangs-Phonemmodell der entsprechenden Phonemeinheit $X$ -1 -mal neu generiert. Außerdem werden die Modelle der nicht verwendeten Phonemeinheiten sowie Phonemeinheiten, die eine Kontextabhängigkeit zu nicht verwendeten Phonemen aufweisen, entfernt.

Das so erhaltene Start-Set von Phonemmodellen für die Zielsprache wird mittels einer geeigneten Adaptionstechnik angepasst. Hierbei können insbesondere die üblichen Adaptionstechniken wie beispielsweise ein Maximum a Posteriori (MAP) -Verfahren (siehe z. B. C.H. Lee und J.L. Gauvain "Speaker Adaption Based on MAP Estimation of HMM Parameters" in Proc. ICASSP, pp. 558-561,1993) oder ein Maximum Likelyhood Linear Regression (MLLR) -Verfahren (siehe z. B. J.C. Leggetter und P.C. Woodland "Maximum Likelyhood Linear Regression for Speaker Adaption of Continous Density Hidden Markow Modells" in "Computer Speech and Language" (1995) 9, pp. 171-185) verwendet werden. Selbstverständlich können auch beliebige andere Adaptionstechniken verwendet werden.

Auf diese Weise können erfindungsgemäß auch bei einem nur geringen Umfang der zur Verfügung stehenden Sprachdaten in der Zielsprache recht gute Modelle für eine neue Zielsprache erzeugt werden, welche dann wiederum zur Bildung von Sets von akustischen Modellen zur Verwendung in Spracherkennungssystemen zur Verfügung stehen. Die bisherigen Ergebnisse bei dem oben genannten Ausführungsbeispiel zeigen eine klare Überlegenheit des erfindungsgemäßen Verfahrens gegenüber sowohl rein datenbasierten als auch rein lautschriftbasierten Ansätzen für die Definition und Zuordnung von Phonemeinheiten. Obwohl nur je 1/2 Minute Sprachmaterial von 30 Sprechern in der Zielsprache zur Verfügung standen, konnte in einem Spracherkennungssystem auf Basis der erfindungsgemäß erzeugten Modelle für die multilingualen Phonemeinheiten (vor einer Adaption an die Zielsprache), eine Reduzierung der Wortfehlerrate um etwa 1/4 gegenüber den herkömmlichen Verfahren erreicht werden.

**Patentansprüche**

**1.** Verfahren zur Zuordnung von Phonemen ($P_k$) einer Zielsprache zu jeweils einer Ausgangs-Phonemeinheit ($PE_z$ ($P_k$)) eines Sets von Ausgangs-Phonemeinheiten ($PE_1$, $PE_2$,...,$PE_N$), welche jeweils durch Ausgangs-Phonemmodelle beschrieben werden, die unter Verwendung vorhandener Sprachdaten einer Ausgangssprache erzeugt wurden, **gekennzeichnet durch** folgende Verfahrensschritte:

- Verwendung mindestens zweier verschiedener sprachdatengetriebener Zuordnungsverfahren (1, 2) zur Zuordnung der Phoneme ($P_k$) der Zielsprache zu jeweils einer Ausgangs-Phonemeinheit ($PE_i(P_k)$, $PE_j(P_k)$)
- Ermittlung, ob das jeweilige Phonem ($P_k$) von einer Mehrheit der verschiedenen sprachdatengetriebenen Zuordnungsverfahren übereinstimmend derselben Ausgangs-Phonemeinheit ($PE_i(P_k)$, $PE_j(P_k)$) zugeordnet wurde
- Auswahl der von der Mehrheit der sprachdatengetriebenen Zuordnungsverfahren (1, 2) zugeordneten Ausgangs-Phonemeinheit ($PE_i(P_k)$, $PE_j(P_k)$) als die dem jeweiligen Phonem ($P_k$) zugeordnete Ausgangs-Phonemeinheit ($PE_z(P_k)$), sofern eine mehrheitlich übereinstimmende Zuordnung **durch** die verschiedenen sprachdatengetriebenen Zuordnungsverfahren (1, 2) existiert,
- oder andernfalls Auswahl einer Ausgangs-Phonemeinheit ($PE_z(P_k)$) aus allen Ausgangs-Phonemeinheiten

($PE_i(P_k)$, $PE_j(P_k)$), die von mindestens einem der verschiedenen sprachdatengetriebenen Zuordnungsverfahren (1, 2) dem jeweiligen Phonem ($P_k$) zugeordnet wurden, unter Verwendung eines Ähnlichkeitsmaßes gemäß einer symbolphonetischen Besrhreibung des zuzuordnenden Phonems ($P_k$) und der Ausgangs-Phonemeinheiten ($PE_i(P_k)$, $PE_j(P_k)$).

**2.** Verfahren nach Anspruch 1,
**dadurch gekennzeichnet,**
**dass** zumindest ein Teil der Ausgangs-Phonemeinheiten ($PE_1$, $PE_2$,..., $PE_N$) multilinguale Phonemeinheiten ($PE_1$, $PE_2$, ..., $PE_N$) sind, die aus Sprachdaten verschiedener Ausgangssprachen gebildet sind.

**3.** Verfahren nach Anspruch 1 oder 2,
**dadurch gekennzeichnet,**
**dass** das Ähnlichkeitsmaß gemäß der symbolphonetischen Beschreibung Informationen über eine Zuordnung des jeweiligen Phonems ($P_k$) und über eine Zuordnung der jeweiligen Ausgangs-Phonemeinheiten ($PE_i(P_k)$, $PE_j(P_k)$) zu Phonemsymbolen und/oder Phonemklassen einer vorgegebenen Lautschrift (SAMPA) umfasst.

**4.** Verfahren nach einem der Ansprüche 1 bis 3,
**dadurch gekennzeichnet,**
**dass** bei einem der sprachdatengetriebenen Zuordnungsverfahren (1) in einem ersten Schritt unter Verwendung von Sprachdaten (SD) der Zielsprache Phonemmodelle für die Phoneme ($P_k$) der Zielsprache erzeugt wird, und dann für alle Ausgangs-Phonemeinheiten ($PE_1$, $PE_2$,..., $PE_N$) jeweils ein Differenzmaß des Ausgangs-Phonemmodells der entsprechenden Ausgangs-Phonemeinheit zu den Phonemmodellen der Phoneme ($P_k$) der Zielsprache ermittelt wird, und den Phonemen ($P_k$) der Zielsprache jeweils die Ausgangs-Phonemeinheit ($PE_i(P_k)$) mit dem kleinsten Differenzmaß zugeordnet wird.

**5.** Verfahren nach einem der Ansprüche 1 bis 4,
**dadurch gekennzeichnet,**
**dass** bei einem der sprachdatengetriebenen Zuordnungsverfahren (2) Sprachdaten (SD) der Zielsprache unter Verwendung von Phonemmodellen einer definierten Lautschrift in einzelne Phoneme ($P_k$) segmentiert werden, und für jedes dieser Phoneme ($P_k$) in einem Spracherkennungssystem, welches das Set der Ausgangs-Phonemmodelle der zuzuordnenden Ausgangs-Phonemeinheiten ($PE_1$, $PE_2$,..., $PE_N$) umfasst, Erkennungswerte für die Ausgangs-Phonemmodelle ermittelt werden, und jedem Phonem ($P_k$) die Ausgangs-Phonemeinheit ($PE_j(P_k)$) zugeordnet wird, für deren Ausgangs-Phonemmodell am häufigsten die besten Erkennungswerte ermittelt wurden.

**6.** Verfahren zur Erzeugung von Phonemmodellen für Phoneme einer Zielsprache zur Verwendung in automatischen Spracherkennungssystemen für diese Zielsprache,
bei dem den Phonemen der Zielsprache nach einem Verfahren gemäß einem der vorstehenden Ansprüche Ausgangs-Phonemeinheiten zugeordnet werden, welche jeweils durch Ausgangs-Phonemmodelle beschrieben werden, die unter Verwendung vorhandener Sprachdaten einer von der Zielsprache verschiedenen Ausgangssprache erzeugt wurden, und bei dem dann für jedes Zielsprachen-Phonem das Ausgangs-Phonemmodell der zugeordneten Ausgangs-Phonemeinheit unter Verwendung der Sprachdaten der Zielsprache an die Zielsprache angepasst wird.

**7.** Computerprogramm mit Programmcode-Mitteln, um alle Schritte gemäß einem der vorstehenden Ansprüche auszuführen, wenn das Programm auf einem Computer ausgeführt wird.

**8.** Computerprogramm mit Programmcode-Mitteln gemäß Anspruch 7, die auf einem computerlesbaren Datenträger abgespeichert sind.

**9.** Set von akustischen Modellen zur Verwendung in automatischen Spracherkennungssystemen, umfassend mehrere nach einem Verfahren gemäß Anspruch 6 erzeugte Phonemmodelle.

**10.** Spracherkennungssystem enthaltend einen Set von akustischen Modellen gemäß Anspruch 9.1.

SD

1

2

$PE_1, PE_2, ..., PE_N$

$PE_i(P_k)$

$PE_j(P_k)$

$PE_i(P_k) = PE_j(P_k)$?

y

n

$PE_i(P_k)$ ; $PE_j(P_k)$ ; $P_k$

$PE_z(P_k) = PE_i(P_k)$

SAMPA

$PE_{z1}(P_1), PE_{z2}(P_2), ..., PE_{zk}(P_k), ..., PE_{zm}(P_m)$ ;

$k = 1 ... M$

# FIG. 1

| | |
|---|---|
| 1 $\ell$-d. phoneme (37) | $9_f, 9_g, @_p, D_s, E{:}_g, G_s, H_f, J_i, L_i, L_p,$ $O_g, SS_i, Y_g, Z_i, a{:}_g, bb_i, d_g, dd_i, e\!\sim_f,$ $e\!\sim_p, gg_i, h_g, i\!\sim_p, j\!\sim_p, k_g, \ell_g, \ell\ell_i, \ell\!\sim_p,$ $mm_i, pp_i, r_g, u\!\sim_p, w_f, w_p, y_f, y{:}_g, z_s$ |
| 2 $\ell$-d. phonemes (39) | $2_f + 2{:}_g, 9\!\sim_f + 6\!\sim_p, E_i + E_g, J_f + JJ_i, J_s + J_p,$ $L_s + LL_i, N_s + N_g, O_p + O_i, S_g + S_f, S_i + S_s,$ $S_p + C_g, T_s + ff_i, Z_p + Z_f, a_p + a_g, a\!\sim_f + O\!\sim_p,$ $b_g + p_i, b_i + b_s, b_p + b_f, d_p + d_f, d_s + d_i,$ $e_p + e{:}_g, g_p + g_f, g_s + g_i, j_i + j_g, j_s + j_f,$ $k_i + g_g, n_p + nn_i, o_f + U_g, o{:}_g + o_p, o\!\sim_f + w\!\sim_p,$ $rr_i + rr_s, ss_i + z_g, u_p + u_f, v_f + v_p, v_i + B_s,$ $w_i + v_g, w_i + w_s, x_g + R_f, x_s + R_p$ |
| 3 $\ell$-d. phonemes (9) | $@_g + @_f + 6_p, a_s + a_i + a_f, j_p + I_g + e_f,$ $o_s + o_i O_f, r_s + r_p + r_i, t_g + t_i + t_s,$ $tt_i + t_f + t_p, u_s + u_i + u{:}_g, z_i + z_p + z_f$ |
| 4 $\ell$-d. phonemes (5) | $e_s + e_i + E_f + E_p, kk_i + k_p + k_f + k_s, \ell_g + \ell_s + \ell_i + \ell_f,$ $n_s + n_i + n_g + n_f, p_p + p_f + p_g + p_s$ |
| 5 $\ell$-d. phonemes (4) | $f_i + f_s + f_g + f_f + f_p, i_s + i_i + i{:}_g + i_p + i_f,$ $m_s + m_i + m_p + m_f + m_g, s_s + s_g + s_i + s_f + s_p$ |

FIG. 2